# EUROPEAN PATENT APPLICATION

(11) **EP 2 608 596 A1**
(43) Date of publication of application: **26.06.2013**
(21) Application number: 11818146.0
(22) Date of filing: 12.08.2011
(51) Int. Cl.: H04W 24/08, H04W 24/10, H04W 36/00, H04W 64/00

(54) **MOBILE COMMUNICATION METHOD AND MOBILE STATION**

(30) Priority: 16.08.2010 JP 2010181953
(71) Applicant: NTT DOCOMO, INC., Chiyoda-ku Tokyo 100-6150 (JP)
(72) Inventor: HAPSARI, Wuri Andarmawanti, Tokyo 100-6150 (JP); IWAMURA, Mikio, Tokyo 100-6150 (JP); UMESH, Anil, Tokyo 100-6150 (JP); TAKAHASHI, Hideaki, Tokyo 100-6150 (JP); ISHII, Minami, Tokyo 100-6150 (JP)
(74) Representative: HOFFMANN EITLE
(86) International application number: PCT/JP2011/068421
(87) International publication number: WO 2012/023504

(57) **Abstract**

A mobile communication method according to the present invention includes a step A of acquiring, by a mobile station UE in a standby state, radio quality in a cell designated by "MDT Configuration" in a period defined by a "Logged MDT measurement period", and generating and storing "LogMDTreport", a step B of, when a standby cell is changed, acquiring, by the mobile station UE, radio quality in the changed standby cell, and generating and storing "LogMDTCellReselect", and a step C of transmitting, by the mobile station UE, the "LogMDTreport" and the "LogMDTCellReselect" to a radio base station eNB after the mobile station UE is changed to an active state.

## Description

### [Technical Field]

The present invention relates to a mobile communication method and a mobile station.

### [Background Art]

In an LTE (Long Term Evolution) scheme, "MDT (Minimisation of Drive Tests)" is defined.

According to the MDT, in "Logged MDT", firstly, when a mobile station UE is in a standby state, the mobile station UE performs a MDT measurement process designated by "MDT Measurement Configuration", and generates and stores a MDT log including a result of the measurement.

Secondly, when the mobile station UE is changed to an active state in a predetermined cell, the mobile station UE transmits a Log presence notification, which indicates that the MDT log has been stored, to a radio base station eNB that manages the predetermined cell.

Thirdly, when a Log report request was received from the radio base station eNB, the mobile station UE reports the stored MDT log to the radio base station eNB.

### [Citation List]

### [Non Patent Literature]

[NPL 1] 3GPP TR36.805
[NPL 2] 3GPP TS37.320

### [Summary of Invention]

### [Technical Problem]

However, the conventional LTE scheme does not define a message structure for generating the MDT log, that is, a measurement item to be stored as the MDT log and a timing therefore, which results in a problem that the mobile station UE is not able to perform a report for appropriate MDT.

Therefore, the present invention has been achieved in view of the above-described problems, and an object thereof is to provide a mobile communication method and a mobile station with which it is possible to generate a MDT log including appropriate information in an optimal message structure at an appropriate timing.

### [Solution to Problem]

A first characteristic of the present embodiment is summarized in that a mobile communication method includes: a step A of acquiring, by a mobile station in a standby state, radio quality in a designated cell in a predetermined period, and generating and storing first log information; a step B of, when a standby cell is changed, acquiring, by the mobile station, radio quality in the changed standby cell, and generating and storing second log information; and a step C of transmitting, by the mobile station, the first log information and the second log information to a radio base station after the mobile station is changed to an active state.

A second characteristic of the present embodiment is summarized in that a mobile communication method includes: a step A of acquiring, by a mobile station in a standby state, radio quality in a designated cell in a predetermined period, and generating and storing log information; a step B of, when a standby cell is changed, acquiring, by the mobile station, radio quality in the changed standby cell, and generating and storing the log information; and a step C of transmitting, by the mobile station, the log information to a radio base station after the mobile station is changed to an active state, wherein the radio quality in the designated cell, the radio quality in the changed standby cell, and information indicating that the mobile station changed the standby cell are set in the log information.

A third characteristic of the present embodiment is summarized in that a mobile communication method includes: a step A of acquiring, by a mobile station in a standby state, location information of the mobile station at a predetermined timing, and generating and storing log information; a step B of acquiring, by the mobile station, radio quality in a designated cell in a predetermined period defined, and generating and storing the log information; a step C of generating and storing, by the mobile station, the log information when a standby cell is changed; a step D of generating and storing, by the mobile station, the log information when it is detected that the mobile station entered an out-of-service area; and a step E of transmitting, by the mobile station, the log information to a radio base station after the mobile station is changed to an active state, wherein only one of the location information, the radio quality, information indicating that the mobile station changed the standby cell, and information indicating that the mobile station entered the serving area is set in the log information.

A fourth characteristic of the present embodiment is summarized in that a mobile station includes: an acquisition unit; a management unit; and a transmission unit, wherein when the mobile station is in a standby state, the acquisition unit is configured to acquire radio quality in a designated cell in a predetermined period and the management unit is configured to generate and store first log information, when the mobile station changed a standby cell, the acquisition unit is configured to acquire radio quality in the changed standby cell and the management unit is configured to generate and store second log information, and after the mobile station is changed to an active state, the transmission unit is configured to transmit the first log information and the second log information to a radio base station.

A fifth characteristic of the present embodiment is summarized in that a mobile station includes: an acquisition unit; a management unit; and a transmission unit, wherein when the mobile station is in a standby state, the acquisition unit is configured to acquire radio quality in a designated cell in a predetermined period and the management unit is configured to generate and store log information, when the mobile station changed a standby cell, the acquisition unit is configured to acquire radio quality in the changed standby cell and the management unit is configured to generate and store the log information, and after the mobile station is changed to an active state, the transmission unit is configured to transmit the log information to a radio base station, wherein the radio quality in the designated cell, the radio quality in the changed standby cell, and information indicating that the mobile station changed the standby cell are set in the log information.

A sixth characteristic of the present embodiment is summarized in that a mobile station includes: an acquisition unit; a management unit; and a transmission unit, wherein when the mobile station is in a standby state, the acquisition unit is configured to acquire location information of the mobile station at a predetermined timing and the management unit is configured to generate and store log information; when the mobile station is in the standby state, the acquisition unit is configured to acquire radio quality in a designated cell in a predetermined period and the management unit is configured to generate and store the log information; when the mobile station changed a standby cell, the management unit is configured to generate and store the log information; when it is detected that the mobile station entered an out-of-service area, the management unit is configured to generate and store the log information; after the mobile station is changed to an active state, the transmission unit is configured to transmit the log information to a radio base station, wherein only one of the location information, the radio quality, information indicating that the mobile station changed the standby cell, and information indicating that the mobile station enters the serving area is set in the log information.

### [Advantageous Effects of Invention]

As described above, according to the present invention, it is possible to provide a mobile communication method and a mobile station, with which it is possible to generate a MDT log including appropriate information in an optimal message structure at an appropriate timing.

### [Brief Description of Drawings]

[Fig. 1] Fig. 1 is a diagram illustrating the entire configuration of a mobile communication system according to a first embodiment of the present invention.
[Fig. 2] Fig. 2 is a functional block diagram of a mobile station according to the first embodiment of the present invention.
[Fig. 3] Fig. 3(a) and 3(b) are diagrams illustrating an example of expression of ASN.1 of a MDT log reported in the mobile communication system according to the first embodiment of the present invention.
[Fig. 4] Fig. 4 is a diagram illustrating an example of expression of ASN.1 of the MDT log reported in the mobile communication system according to the first embodiment of the present invention.
[Fig. 5] Fig. 5(a) and 5(b) are diagrams for explaining an operation of the mobile communication system according to the first embodiment of the present invention.
[Fig. 6] Fig. 6 is a diagram illustrating an example of expression of ASN.1 of a MDT log reported in a mobile communication system according to a first modification of the present invention.
[Fig. 7] Fig. 7 is a diagram for explaining an operation of the mobile communication system according to the first modification of the present invention.

### [Description of Embodiments]

### (Mobile communication system according to first embodiment of the present invention)

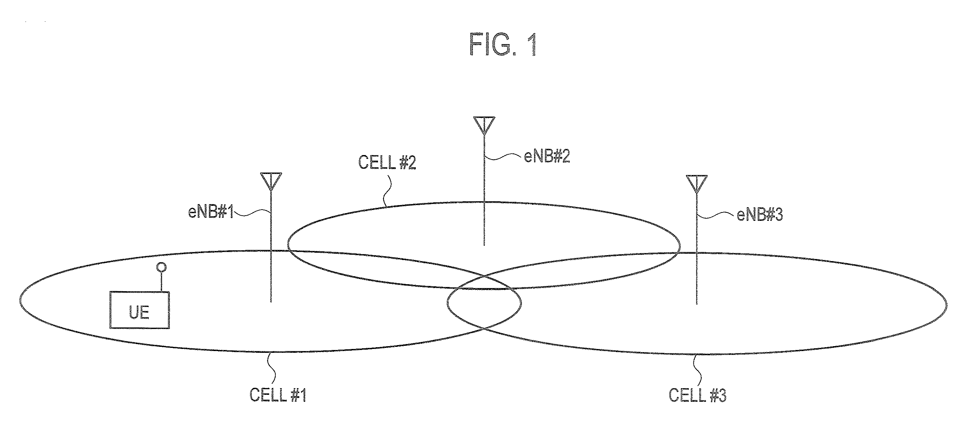

A mobile communication system according to a first embodiment of the present invention is described with reference to Fig. 1 through Fig. 5.

As illustrated in Fig. 1, the mobile communication system according to the present embodiment is an LTE mobile communication system, and includes a radio base station eNB#1 configured to manage a cell #1, a radio base station eNB#2 configured to manage a cell #2, and a radio base station eNB#3 configured to manage a cell #3.

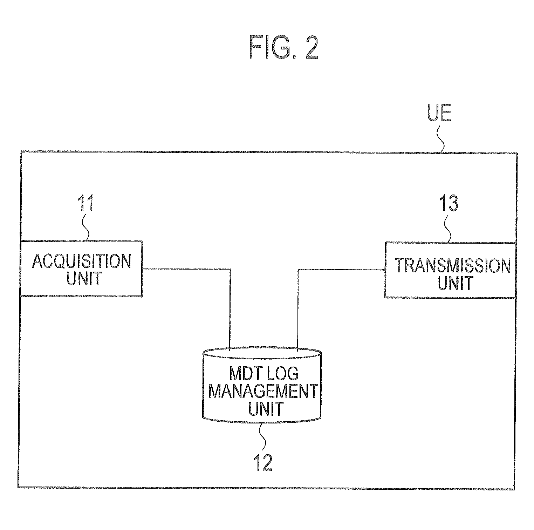

A mobile station UE according to the present embodiment is able to cope with "Logged MDT", and includes an acquisition unit 11, a MDT log management unit 12, and a transmission unit 13 as illustrated in Fig. 2.

The acquisition unit 11 is configured to acquire information required for generating a MDT log when the mobile station UE is in a standby state (an RRC-Idle state).

For example, the acquisition unit 11 may be configured to acquire "RSRP (Reference signal Received Power)" and "RSRP (Reference signal Received Quality)", which are radio quality in a cell (a frequency), which is designated by "MDT Configuration" transmitted by a radio base station eNB, in a period defined by a "Logged MDT measurement period".

Furthermore, when the mobile station UE performed a cell reselection process (Cell Reselection) to change a standby cell, the acquisition unit 12 may be configured to acquire "E-CGI (E-UTRAN Cell Global Identifier)" and "PCI (Physical Cell Identity)", which are identification information of the changed standby cell, radio quality (RSRP, RSRQ and the like) in the changed standby cell, and the like.

Moreover, the acquisition unit 11 may be configured to acquire "Location Information", which indicates the location information of the mobile station UE at a timing different from the period defined by the "Logged MDT measurement period".

Furthermore, the acquisition unit 11 may be configured to acquire "TimeStamp" indicating time information when the aforementioned acquisition was performed.

The MDT log management unit 12 is configured to generate and store a MDT log based on the information acquired by the acquisition unit 11.

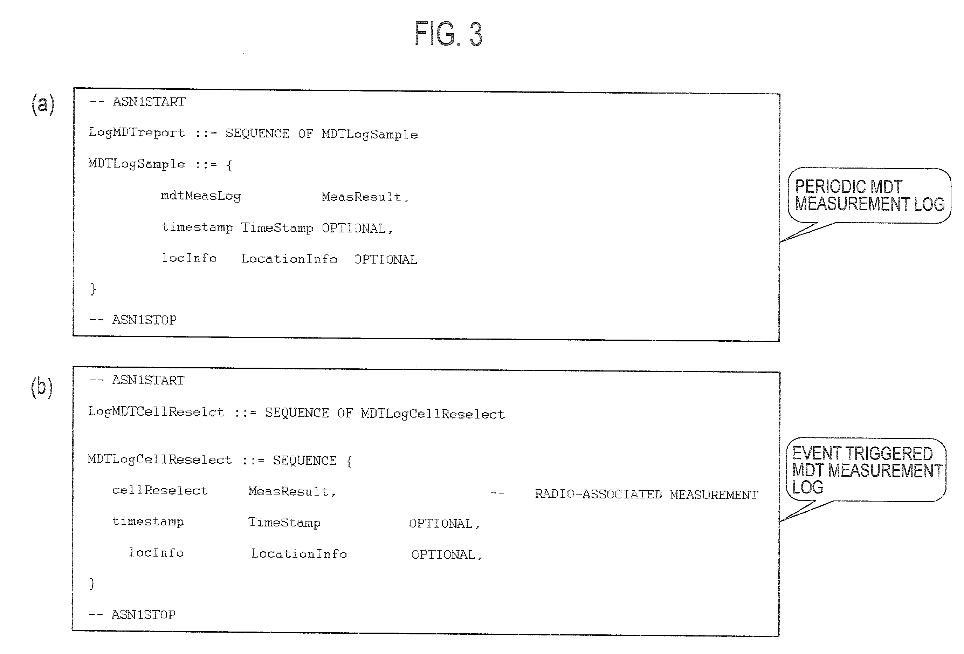

For example, the MDT log management unit 12 may be configured to generate the MDT log as "LogMDTreport" illustrated in Fig. 3(a) based on the radio quality acquired by the acquisition unit 11 in the period defined by the "Logged MDT measurement period".

Furthermore, the MDT log management unit 12 is configured to set the radio quality (MeasResult) in "mdtMeasLog" of the "LogMDTreport".

Furthermore, the MDT log management unit 12 may be configured to set time information (TimeStamp) when the radio quality was acquired in "timestamp" of the "LogMDTreport".

Moreover, the MDT log management unit 12 may be configured to set the latest location information (LocationInfo) of the mobile station UE, which was acquired by the acquisition unit 11, in "locInfo" of the "LogMDTreport".

Furthermore, the MDT log management unit 12 may be configured to determine whether to set the location information of the mobile station UE in the "locInfo" of the "LogMDTreport" according to the passage of time after the acquisition.

That is, in the case of storing the location information of the mobile station UE, which is not subject to the passage of predetermined time after being acquired, the MDT log management unit 12 may be configured to set the location information of the mobile station UE in the "locInfo" of the "LogMDTreport".

Meanwhile, in the case of storing only the location information of the mobile station UE, which is subject to the passage of predetermined time after being acquired, the MDT log management unit 12 may be configured not to set the location information of the mobile station UE in the "locInfo" of the "LogMDTreport".

That is, in the "LogMDTreport" illustrated in Fig. 3(a), it is possible to set the radio quality (MeasResult) in a cell designated by the "MDT Configuration", and the location information (LocationInfo) of the mobile station UE, and the time information (TimeStamp).

Meanwhile, the MDT log management unit 12 may be configured to generate the MDT log as "LogMDTCellReselect" illustrated in Fig. 3(b) based on the radio quality acquired by the acquisition unit 11 when the standby cell was changed.

Furthermore, the MDT log management unit 12 is configured to set the radio quality (MeasResult) in "cellReselect" of the "LogMDTCellReselect".

Furthermore, the MDT log management unit 12 may be configured to set the time information (TimeStamp) when the radio quality was acquired in "timestamp" of the "LogMDTCellReselect".

Moreover, the MDT log management unit 12 may be configured to set the latest location information (LocationInfo) of the mobile station UE, which was acquired by the acquisition unit 11, in "locInfo" of the "LogMDTCellReselect".

Furthermore, in the case of storing only the location information of the mobile station UE, which is subject to the passage of predetermined time after being acquired, the MDT log management unit 12 may be configured not to set the location information of the mobile station UE in the "locInfo" of the "LogMDTCellReselect".

That is, in the "LogMDTCellReselect" illustrated in Fig. 3(b), it is possible to set the radio quality (MeasResult) in the changed standby cell, and the location information (LocationInfo) of the mobile station UE, and the time information (TimeStamp).

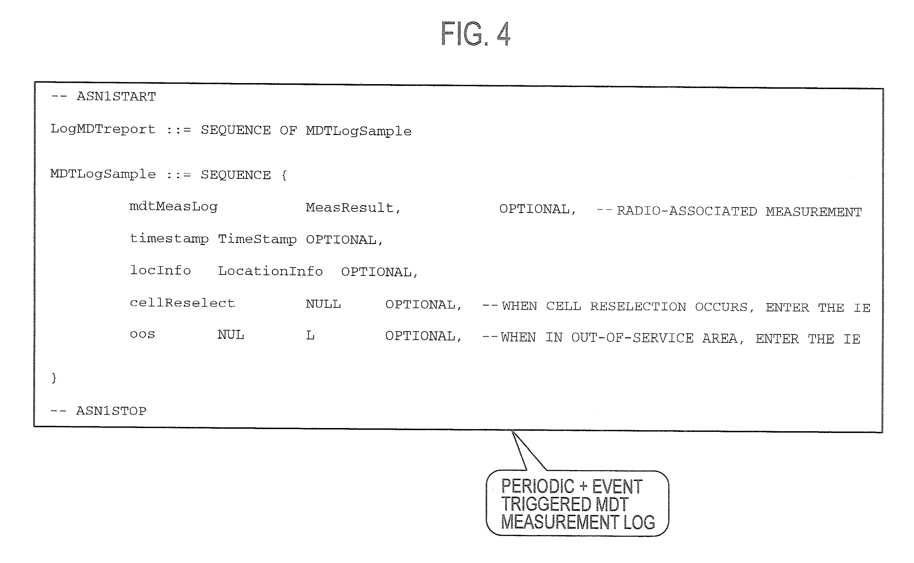

Alternatively, the MDT log management unit 12 may also be configured to generate the MDT log as "LogMDTreport" illustrated in Fig. 4.

Furthermore, the MDT log management unit 12 is configured to set the radio quality (MeasResult), which was acquired by the acquisition unit 11 in the period defined by the "Logged MDT measurement period", in "mdtMeasLog" of the "LogMDTreport".

In addition, the MDT log management unit 12 may be configured to set the radio quality (MeasResult), which was acquired by the acquisition unit 11 when the standby cell was changed, in the "mdtMeasLog" of the "LogMDTreport".

Furthermore, the MDT log management unit 12 may be configured to set time information (TimeStamp) when the radio quality was acquired in "timestamp" of the "LogMDTreport".

Moreover, the MDT log management unit 12 may be configured to set the latest location information (LocationInfo) of the mobile station UE, which was acquired by the acquisition unit 11, in "locInfo" of the "LogMDTreport".

Furthermore, in the case of storing only the location information of the mobile station UE, which is subject to the passage of predetermined time after being acquired, the MDT log management unit 12 may be configured not to set the location information of the mobile station UE in the "locInfo" of the "LogMDTreport".

Furthermore, when the mobile station UE changed the standby cell, the MDT log management unit 12 is configured to set "cellReselect" in the "LogMDTreport".

Moreover, when it is detected that the mobile station UE entered an out-of-service area, the MDT log management unit 12 is configured to set "oos" in the "LogMDTreport".

That is, in the "LogMDTreport" illustrated in Fig. 4, it is possible to set the radio quality (MeasResult) in the cell designated by the "MDT Configuration", the radio quality (MeasResult) in the changed standby cell, the location information (LocationInfo) of the mobile station UE, the time information (TimeStamp), the information (cellReselect) indicating that the mobile station UE changed the standby cell, and the information (oos) indicating that the mobile station UE entered the out-of-service area.

The transmission unit 13 is configured to transmit the "LogMDTreport" and the "LogMDTCellReselect" to a radio base station eNB after the mobile station UE was changed to an active state (an RRC_Connected state).

Specifically, after the mobile station UE is changed to the active state, the transmission unit 13 is configured to transmit a Log presence notification indicating that the MDT log has been stored to the radio base station eNB, and when a Log report request was received from the radio base station eNB, the transmission unit 13 is configured to transmit the "LogMDTreport" and the "LogMDTCellReselect" through an RRC message.

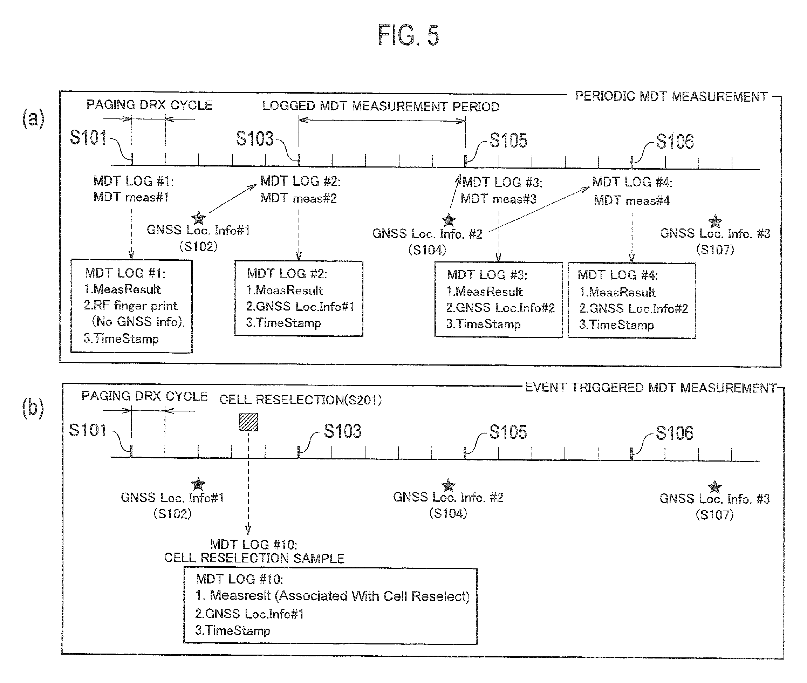

Hereinafter, an example of the operation of the mobile communication system according to the first embodiment of the present invention is described with reference to Fig. 5(a) through Fig. 5(b).

As illustrated in Fig. 5(a), in step S101, the mobile station UE setting the cell #1 as a standby cell performs a MDT measurement process #1, and generates and stores a MDT log #1.

Furthermore, the MDT log #1 includes radio quality (MeasResult) in the designated cell #1 to cell #3, "RF finger print" as location information (LocationInfo) of the mobile station UE, and time information (TimeStamp).

Furthermore, the MDT log #1 may be generated as the "LogMDTreport" illustrated in Fig. 3(a) or the "LogMDTreport" illustrated in Fig. 4.

In step S102, the mobile station UE acquires "GNSS Loc. Info #1" as the location information (LocationInfo) of the mobile station UE.

In step S103, the mobile station UE performs a MDT measurement process #2, and generates and stores a MDT log #2.

Furthermore, the MDT log #2 includes the radio quality (MeasResult) in the designated cell #1 to cell #3, the "GNSS Loc. Info #1" as the location information (LocationInfo) of the mobile station UE, and the time information (TimeStamp).

Furthermore, the MDT log #2 may be generated as the "LogMDTreport" illustrated in Fig. 3(a) or the "LogMDTreport" illustrated in Fig. 4.

In step S104, the mobile station UE acquires "GNSS Loc. Info #2" as the location information (LocationInfo) of the mobile station UE.

In step S105, the mobile station UE performs a MDT measurement process #3, and generates and stores a MDT log #3.

Furthermore, the MDT log #3 includes the radio quality (MeasResult) in the designated cell #1 to cell #3, the "GNSS Loc. Info #2" as the location information (LocationInfo) of the mobile station UE, and the time information (TimeStamp).

Furthermore, the MDT log #3 may be generated as the "LogMDTreport" illustrated in Fig. 3(a) or the "LogMDTreport" illustrated in Fig. 4.

In step S106, the mobile station UE performs a MDT measurement process #4, and generates and stores a MDT log #4.

Furthermore, the MDT log #4 includes the radio quality (MeasResult) in the designated cell #1 to cell #3, the "GNSS Loc. Info #2" as the location information (LocationInfo) of the mobile station UE, and the time information (TimeStamp).

In addition, the location information (LocationInfo) of the mobile station UE included in the MDT log #4 is the "GNSS Loc. Info #2" similarly to the location information (LocationInfo) of the mobile station UE included in the MDT log #3.

Furthermore, the MDT log #4 may be generated as the "LogMDTreport" illustrated in Fig. 3(a) or the "LogMDTreport" illustrated in Fig. 4.

In step S107, the mobile station UE acquires "GNSS Loc. Info #3" as the location information (LocationInfo) of the mobile station UE.

Meanwhile, as illustrated in Fig. 5(b), in step S201, the mobile station UE performs a cell reselection process to change the standby cell from the cell #1 to the cell #2, performs a MDT measurement process #10, and generates and stores a MDT log #10.

Furthermore, the MDT log #10 includes radio quality (MeasResult) in the changed standby cell #2, the "GNSS Loc. Info #1" as the location information (LocationInfo) of the mobile station UE, and the time information (TimeStamp).

Furthermore, the MDT log #10 may be generated as the "LogMDTCellReselect" illustrated in Fig. 3(a) or the "LogMDTreport" illustrated in Fig. 4.

In accordance with the mobile communication system according to the first embodiment of the present invention, as described with reference to Fig. 3 through Fig. 5, the mobile station UE is able to generate a MDT log including appropriate information in an optimal message structure at an appropriate timing.

### (First Modification)

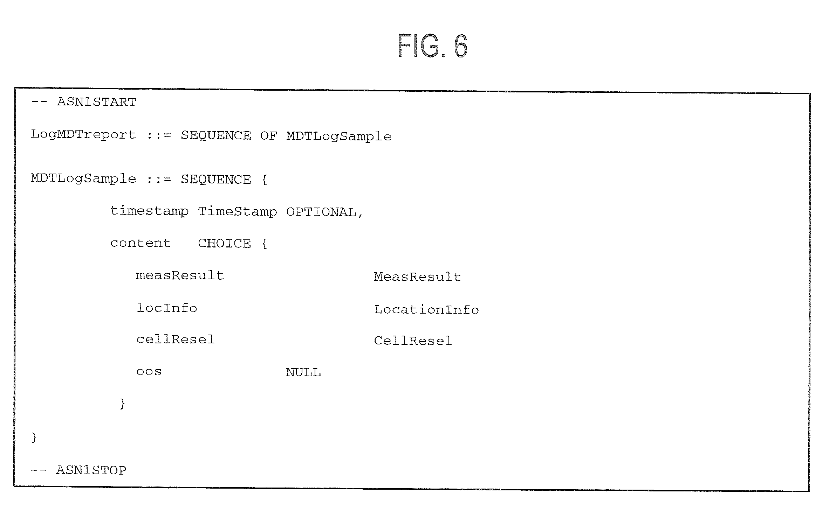

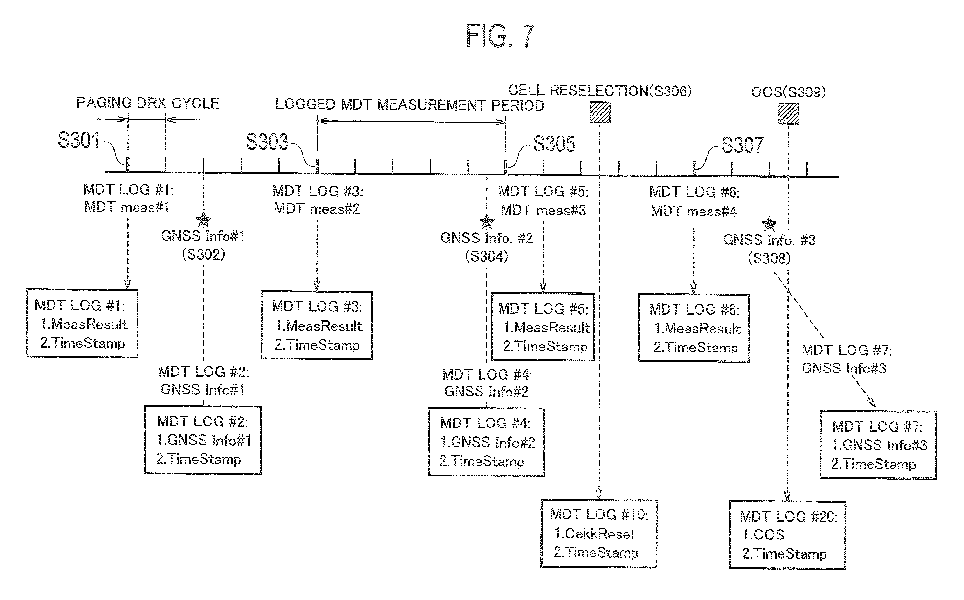

Hereinafter, with reference to Fig. 6 and Fig. 7, a mobile communication system according to a first modification of the present invention is explained while focusing on the difference from the aforementioned mobile communication system according to the first embodiment.

In the mobile communication system according to the first modification, the MDT log management unit 12 may be configured to generate a MDT log as "LogMDTreport" illustrated in Fig. 6.

Furthermore, when the acquisition unit 11 acquired radio quality designated by the "MDT Configuration" in the period defined by the "Logged MDT measurement period", the MDT log management unit 12 is configured to set the radio quality (MeasResult) in "measResult" of the "LogMDTreport".

Furthermore, when the acquisition unit 11 acquired the location information of the mobile station UE at a predetermined timing, the MDT log management unit 12 is configured to set the location information (LocationInfo) of the mobile station UE in "locInfo" of the "LogMDTreport".

Furthermore, when it is detected that the mobile station UE changed a standby cell, the MDT log management unit 12 is configured to set information (CellResel) indicating that the mobile station UE changed the standby cell in "CellResel" of the "LogMDTreport".

In addition, the MDT log management unit 12 may be configured to set radio quality in the changed standby cell and identification information (E-CGI, PCI and the like) of the changed standby cell in the "CellResel" of the "LogMDTreport".

Moreover, when it is detected that the mobile station UE entered an out-of-service area, the MDT log management unit 12 is configured to set "oos" in the "LogMDTreport".

Furthermore, the MDT log management unit 12 may be configured to set time information (TimeStamp) when the aforementioned acquisition and detection were performed in "timestamp" of the "LogMDTreport".

That is, in the "LogMDTreport" illustrated in Fig. 6, it is possible to set only one of the location information (LocationInfo) of the mobile station UE, the radio quality (MeasResult) in the cell designated by the "MDT Configuration", the information (CellResel) indicating that the mobile station UE changed the standby cell, and the information (oos) indicating that the mobile station UE entered the serving area.

Hereinafter, an example of the operation of the mobile communication system according to the first modification is described with reference to Fig. 7.

As illustrated in Fig. 7, in step S301, the mobile station UE setting the cell #1 as a standby cell performs a MDT measurement process #1, and generates and stores a MDT log #1 as the "LogMDTreport" illustrated in Fig. 6.

Furthermore, the MDT log #1 includes radio quality (MeasResult) in the designated cell #1 to cell #3 and time information (TimeStamp).

In step S302, when "GNSS Loc. Info #1" is acquired as the location information (LocationInfo) of the mobile station UE, the mobile station UE generates and stores a MDT log #2 as the "LogMDTreport" illustrated in Fig. 6.

Furthermore, the MDT log #2 includes the "GNSS Loc. Info #1" as the location information (LocationInfo) of the mobile station UE and the time information (TimeStamp).

In step S303, the mobile station UE performs a MDT measurement process #2, and generates and stores a MDT log #3 as the "LogMDTreport" illustrated in Fig. 6.

Furthermore, the MDT log #3 includes the radio quality (MeasResult) in the designated cell #1 to cell #3 and the time information (TimeStamp).

In step S304, when "GNSS Loc. Info #2" is acquired as the location information (LocationInfo) of the mobile station UE, the mobile station UE generates and stores a MDT log #4 as the "LogMDTreport" illustrated in Fig. 6.

Furthermore, the MDT log #4 includes the "GNSS Loc. Info #2" as the location information (LocationInfo) of the mobile station UE and the time information (TimeStamp).

In step S305, the mobile station UE performs a MDT measurement process #3, and generates and stores a MDT log #5 as the "LogMDTreport" illustrated in Fig. 6.

Furthermore, the MDT log #3 includes the radio quality (MeasResult) in the designated cell #1 to cell #3 and the time information (TimeStamp).

In step S306, the mobile station UE performs a cell reselection process to change the standby cell from the cell #1 to the cell #2, and generates and stores a MDT log #10 as the "LogMDTreport" illustrated in Fig. 6.

Furthermore, the MDT log #10 includes information (CellResel) indicating that the mobile station UE changed the standby cell, and the time information (TimeStamp).

In step S307, the mobile station UE performs a MDT measurement process #4, and generates and stores a MDT log #6 as the "LogMDTreport" illustrated in Fig. 6.

Furthermore, the MDT log #6 includes the radio quality (MeasResult) in the designated cell #1 to cell #3 and the time information (TimeStamp).

In step S308, when "GNSS Loc. Info #3" is acquired as the location information (LocationInfo) of the mobile station UE, the mobile station UE generates and stores a MDT log #7 as the "LogMDTreport" illustrated in Fig. 6.

Furthermore, the MDT log #7 includes the "GNSS Loc. Info #3" as the location information (LocationInfo) of the mobile station UE and the time information (TimeStamp).

In step S309, it is detected that the mobile station UE entered an out-of-service area, the mobile station UE generates and stores a MDT log #20 as the "LogMDTreport" illustrated in Fig. 6.

Furthermore, the MDT log #20 includes information (oos) indicating that the mobile station UE entered the out-of-service area, and the time information (TimeStamp).

In accordance with the mobile communication system according to the first embodiment of the present invention, as described with reference to Fig. 6 and Fig. 7, the mobile station UE is able to generate a MDT log including appropriate information in an optimal message structure at an appropriate timing.

The characteristics of the present embodiment as described above may be expressed as follows.

A first characteristic of the present embodiment is summarized in that a mobile communication method includes: a step A of acquiring, by a mobile station UE in a standby state, radio quality in a cell designated by "MDT Configuration" in a period (a predetermined period) defined by a "Logged MDT measurement period", and generating and storing "LogMDTreport" (first log information)"; a step B of, when a standby cell is changed, acquiring, by the mobile station UE, radio quality in the changed standby cell, and generating and storing "LogMDTCellReselect (second log information)"; and a step C of transmitting, by the mobile station UE, the "LogMDTreport" and the "LogMDTCellReselect" to a radio base station eNB after the mobile station UE is changed to an active state.

In the first characteristic of the present embodiment, the mobile communication method further includes: a step D of acquiring, by the mobile station UE, location information of the mobile station UE at a predetermined timing, wherein in the step A or the step B, in the case of storing the location information of the mobile station UE, which is not subject to the passage of predetermined time after being acquired, the mobile station UE may allow the location information (LocationInfo) of the mobile station UE to be included in "locInfo" of the "LogMDTreport" or the "LogMDTCellReselect".

In the first characteristic of the present embodiment, in the step A or the step B, the mobile station UE may allow time information (TimeStamp) when the aforementioned acquisition was performed to be included in "timestamp" of the "LogMDTreport" or the "LogMDTCellReselect".

A second characteristic of the present embodiment is summarized in that a mobile communication method includes: a step A of acquiring, by a mobile station UE in a standby state, radio quality in a cell designated by "MDT Configuration" in a period defined by a "Logged MDT measurement period", and generating and storing "LogMDTreport" (log information)"; a step B of, when a standby cell is changed, acquiring, by the mobile station UE, radio quality in the changed standby cell, and generating and storing the "LogMDTreport"; and a step C of transmitting, by the mobile station UE, the "LogMDTreport" to a radio base station eNB after the mobile station UE is changed to an active state, wherein in the "LogMDTreport", it is possible to set the radio quality (MeasResult) in the designated cell, the radio quality (MeasResult) in the changed standby cell, and information (cellReselect) indicating that the mobile station UE changed the standby cell.

In the second characteristic of the present embodiment, the mobile communication method further includes: a step D of acquiring, by the mobile station UE, location information of the mobile station UE at a predetermined timing, wherein it is possible to further set the location information of the mobile station UE in the "LogMDTreport", and in the step A or the step B, in the case of storing the location information of the mobile station UE, which is not subject to the passage of predetermined time after being acquired, the mobile station UE may allow the location information (LocationInfo) of the mobile station UE to be included in "locInfo" of the "LogMDTreport".

In the second characteristic of the present embodiment, it is possible to further set time information (TimeStamp) in the "LogMDTreport", and in the step A or the step B, the mobile station UE may allow time information (TimeStamp) when the aforementioned acquisition was performed to be included in "timestamp" of the "LogMDTreport".

A third characteristic of the present embodiment is summarized in that a mobile communication method includes: a step A of acquiring, by a mobile station UE in a standby state, location information of the mobile station UE at a predetermined timing, and generating and storing "LogMDTreport"; a step B of acquiring, by the mobile station UE, radio quality in a cell designated by "MDT Configuration" in a period defined by a "Logged MDT measurement period", and generating and storing the "LogMDTreport"; a step C of generating and storing, by the mobile station UE, the "LogMDTreport" when a standby cell is changed; a step D of generating and storing, by the mobile station UE, the "LogMDTreport" when it is detected that the mobile station UE entered an out-of-service area; and a step E of transmitting, by the mobile station UE, the "LogMDTreport" to a radio base station eNB after the mobile station UE is changed to an active state, wherein in the "LogMDTreport", it is possible to set only one of location information (LocationInfo) of the mobile station UE, the aforementioned radio quality (MeasResult), information (CellResel) indicating that the mobile station UE changed the standby cell, and information (oos) indicating that the mobile station UE entered the serving area.

In the third characteristic of the present embodiment, it is possible to further set time information (TimeStamp) in the "LogMDTreport", and in the step A, the step B, the step C, or the step B, the mobile station UE may allow time information (TimeStamp) when the aforementioned acquisition or detection was performed to be included in "timestamp" of the "LogMDTreport".

A fourth characteristic of the present embodiment is summarized in that a mobile station UE includes: an acquisition unit 11; a MDT log management unit 12; and a transmission unit 13, wherein when the mobile station UE is in a standby state, the acquisition unit 11 is configured to acquire radio quality in a cell designated by "MDT Configuration" in a period defined by a "Logged MDT measurement period" and the MDT log management unit 12 is configured to generate and store "LogMDTreport", when the mobile station UE changed a standby cell, the acquisition unit 11 is configured to acquire radio quality in the changed standby cell and the MDT log management unit 12 is configured to generate and store "LogMDTCellReselect", and after the mobile station UE is changed to an active state, the transmission unit 13 is configured to transmit the "LogMDTreport" and the "LogMDTCellReselect" to a radio base station eNB.

A fifth characteristic of the present embodiment is summarized in that a mobile station UE includes an acquisition unit 11; a MDT log management unit 12; and a transmission unit 13, wherein when the mobile station UE is in a standby state, the acquisition unit 11 is configured to acquire radio quality in a cell designated by "MDT Configuration" in a period defined by a "Logged MDT measurement period" and the MDT log management unit 12 is configured to generate and store "LogMDTreport", when the mobile station UE changed a standby cell, the acquisition unit 11 is configured to acquire radio quality in the changed standby cell and the MDT log management unit 12 is configured to generate and store the "LogMDTreport", and after the mobile station UE is changed to an active state, the transmission unit 13 is configured to transmit the "LogMDTreport" to a radio base station eNB, wherein in the "LogMDTreport", it is possible to set the radio quality (MeasResult) in the designated cell, radio quality (MeasResult) in the changed standby cell, and information (cellReselect) indicating that the mobile station UE changed the standby cell.

A sixth characteristic of the present embodiment is summarized in that a mobile station UE includes an acquisition unit 11; a MDT log management unit 12; and a transmission unit 13, wherein when the mobile station UE is in a standby state, the acquisition unit 11 is configured to acquire location information of the mobile station UE at a predetermined timing and the MDT log management unit 12 is configured to generate and store "LogMDTreport", when the mobile station UE is in the standby state, the acquisition unit 11 is configured to acquire radio quality in a cell designated by "MDT Configuration" in a period defined by a "Logged MDT measurement period" and the MDT log management unit 12 is configured to generate and store the "LogMDTreport", when the mobile station UE changed a standby cell, the MDT log management unit 12 is configured to generate and store the "LogMDTreport", when it is detected that the mobile station UE entered an out-of-service area, the MDT log management unit 12 is configured to generate and store the "LogMDTreport"; and after the mobile station UE is changed to an active state, the transmission unit 13 is configured to transmit the "LogMDTreport" to a radio base station eNB, wherein in the "LogMDTreport", it is possible to set only one of location information (LocationInfo) of the mobile station UE, the aforementioned radio quality (MeasResult), information (CellResel) indicating that the mobile station UE changed the standby cell, and information (oos) indicating that the mobile station UE entered the serving area.

In addition, the operation of the above-mentioned radio base station eNB or mobile station UE may be implemented by hardware, may also be implemented by a software module executed by a processor, or may further be implemented by the combination of the both.

The software module may be arranged in a storage medium of an arbitrary format such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can write and read information into and from the storage medium. Such a storage medium may also be accumulated in the processor. Such a storage medium and processor may be arranged in an ASIC. Such an ASIC may be arranged in the radio base station eNB or the mobile station UE. As a discrete component, such a storage medium and processor may be arranged in the radio base station eNB or the mobile station UE.

Thus, the present invention has been explained in detail by using the above-mentioned embodiments; however, it is obvious that for persons skilled in the art, the present invention is not limited to the embodiments explained herein. The present invention can be implemented as a corrected and modified mode without departing the gist and the scope of the present invention defined by the claims. Therefore, the description of the specification is intended for explaining the example only and does not impose any limited meaning to the present invention.

**[Reference Signs List]**

| | |
|---|---|
| UE | Mobile station |
| eNB | Radio base station |
| 11 | Acquisition unit |
| 12 | MDT log management unit |
| 13 | Transmission unit |

## Claims

1. A mobile communication method comprising:
a step A of acquiring, by a mobile station in a standby state, radio quality in a designated cell in a predetermined period, and generating and storing first log information;
a step B of, when a standby cell is changed, acquiring, by the mobile station, radio quality in the changed standby cell, and generating and storing second log information; and
a step C of transmitting, by the mobile station, the first log information and the second log information to a radio base station after the mobile station is changed to an active state.

2. The mobile communication method according to claim 1, further comprising:
a step D of acquiring, by the mobile station, location information of the mobile station at a predetermined timing, wherein
in the step A or the step B, in a case of storing the location information not subject to passage of predetermined time after being acquired, the mobile station allows the location information to be included in the first log information or the second log information.

3. The mobile communication method according to claim 1, wherein
in the step A or the step B, the mobile station allows time information when the acquisition has been performed to be included in the first log information or the second log information.

4. A mobile communication method, comprising:
a step A of acquiring, by a mobile station in a standby state, radio quality in a designated cell in a predetermined period, and generating and storing log information;
a step B of, when a standby cell is changed, acquiring, by the mobile station, radio quality in the changed standby cell, and generating and storing the log information; and
a step C of transmitting, by the mobile station, the log information to a radio base station after the mobile station is changed to an active state, wherein
the radio quality in the designated cell, the radio quality in the changed standby cell, and information indicating that the mobile station has changed the standby cell are set in the log information.

5. The mobile communication method according to claim 4, further comprising:
a step D of acquiring, by the mobile station, location information of the mobile station at a predetermined timing, wherein
the location information is further set in the log information, and
in the step A or the step B, in a case of storing the location information not subject to passage of predetermined time after being acquired, the mobile station allows the location information to be included in the log information.

6. The mobile communication method according to claim 4, wherein
time information is further set in the log information, and
in the step A or the step B, the mobile station allows time information when the acquisition has been performed to be included in the log information.

7. A mobile communication method, comprising:
a step A of acquiring, by a mobile station in a standby state, location information of the mobile station at a predetermined timing, and generating and storing log information;
a step B of acquiring, by the mobile station, radio quality in a designated cell in a predetermined period, and generating and storing the log information;
a step C of generating and storing, by the mobile station, the log information when a standby cell is changed;
a step D of generating and storing, by the mobile station, the log information when it is detected that the mobile station has entered an out-of-service area; and
a step E of transmitting, by the mobile station, the log information to a radio base station after the mobile station is changed to an active state, wherein
only one of the location information, the radio quality, information indicating that the mobile station has changed the standby cell, and information indicating that the mobile station has entered the serving area is set in the log information.

8. The mobile communication method according to claim 7, wherein
time information is further set in the log information, and
in the step A, the step B, the step C, or the step B, the mobile station allows time information when the acquisition or detection has been performed to be included in the log information.

9. A mobile station comprising:
an acquisition unit; a management unit; and a transmission unit, wherein
when the mobile station is in a standby state, the acquisition unit is configured to acquire radio quality in a designated cell in a predetermined period and the management unit is configured to generate and store first log information,
when the mobile station has changed a standby cell, the acquisition unit is configured to acquire radio quality in the changed standby cell and the management unit is configured to generate and store second log information, and
after the mobile station is changed to an active state, the transmission unit is configured to transmit the first log information and the second log information to a radio base station.

10. A mobile station comprising:
an acquisition unit; a management unit; and a transmission unit, wherein
when the mobile station is in a standby state, the acquisition unit is configured to acquire radio quality in a designated cell in a predetermined period and the management unit is configured to generate and store log information,
when the mobile station has changed a standby cell, the acquisition unit is configured to acquire radio quality in the changed standby cell and the management unit is configured to generate and store the log information, and
after the mobile station is changed to an active state, the transmission unit is configured to transmit the log information to a radio base station, and
the radio quality in the designated cell, the radio quality in the changed standby cell, and information indicating that the mobile station has changed the standby cell are set in the log information.

11. A mobile station comprising:
an acquisition unit; a management unit; and a transmission unit, wherein
when the mobile station is in a standby state, the acquisition unit is configured to acquire location information of the mobile station at a predetermined timing and the management unit is configured to generate and store log information,
when the mobile station is in the standby state, the acquisition unit is configured to acquire radio quality in a designated cell in a predetermined period defined and the management unit is configured to generate and store the log information,
when the mobile station has changed a standby cell, the management unit is configured to generate and store the log information,
when it is detected that the mobile station has entered an out-of-service area, the management unit is configured to generate and store the log information,
after the mobile station is changed to an active state, the transmission unit is configured to transmit the log information to a radio base station, and
only one of the location information, the radio quality, information indicating that the mobile station has changed the standby cell, and information indicating that the mobile station has entered the serving area is set in the log information.
